Europäisches Patentamt

European Patent Office

Office européen des brevets

(11) Publication number: **0 333 414**
**A2**

# EUROPEAN PATENT APPLICATION

(21) Application number: **89302460.4**

(22) Date of filing: **13.03.89**

(51) Int. Cl.⁴: **C08L 67/00** , //(C08L67/00, 51:06)

(30) Priority: **16.03.88 JP 62946/88**

(43) Date of publication of application:
**20.09.89 Bulletin 89/38**

(84) Designated Contracting States:
**AT BE CH DE ES FR GB GR IT LI LU NL SE**

(71) Applicant: **POLYPLASTICS CO. LTD.**
**3-13, Azuchi-machi 2-chome**
**Chuo-Ku Osaka-shi(JP)**

(72) Inventor: **Wada, Mitsuo**
**109-9, Heigaki**
**Fuji-shi Shizuoka(JP)**
Inventor: **Usami, Takashi**
**885-11, Miyajima**
**Fuji-shi Shizuoka(JP)**
Inventor: **Nakatsuji, Hiroshi**
**91-19, Miyashita,**
**Fuji-shi Shizuoka(JP)**

(74) Representative: **Jackson, Peter et al**
**HYDE, HEIDE & O'DONNELL 146 Buckingham**
**Palace Road**
**London SW1W 9TR(GB)**

(54) Improved thermoplastic polyester resin and process for producing the same.

(57) A thermoplastic polyester resin of improved impact resistance for use in automobile or office equipment components is produced by melting and kneading the polyester with a modified olefin copolymer obtained by graft polymerisation of an unsaturated carboxylic acid, or derivative thereof, on an olefin polymer and heating the kneaded mixture at a defined elevated temperature for not less than 30 minutes.

EP 0 333 414 A2

# IMPROVED THERMOPLASTIC POLYESTER RESIN AND PROCESS FOR PRODUCING THE SAME

The present invention relates to an improved theremoplastic polyester resin capable of forming moldings having excellent impact characteristics and physical properties, such as Young's modulus in flexure, which are hardly deteriorated.

[Prior Art ]

Thermoplastic polyester resins are widely used as engineering plastics for the production of automobiles and electric and electronic components, since they have excellent moldability, mechanical strength, electric characteristics and chemical characteristics.

Although they have the above-described characteristics, their impact resistance is problematic for some applications, so that these resins per se are often unsatisfactory for applications wherein a high impact resistance is required. Under these circumstances, various processes were proposed for improving the impact resistance of the thermoplastic polyester resins. A typical example of these processes comprises adding an impact resistance improver such as polycarbonate, olefinic polymer or rubbery polymer to the polyester.

Although moldings having an impact resistance improved to some extent can be obtained by these processes, their effect is yet insufficient and moldings having a quite high impact resistance could not be easily obtained as yet. When the polymer is used in a large amount in order to attain a high impact resistance, the excellent mechanical characteristics, particularly the modulus of elasticity and rigidity, of the polyester are impaired and also the chemical resistance thereof is often reduced unfavorably.

[Summary of the Invention]

After intensive investigations made for the purpose of improving the impact resistance of the thermoplastic polyester resin without detriment to the excellent mechanical properties, particularly the rigidity and modulus of elasticity, as far as possible, the inventors have found that an improved thermoplastic polyester satisfying the above described-purpose can be produced by melt kneading the thermoplastic polyester with a specific, modified olefin copolymer and keeping the mixture at a specific temperature to conduct the reaction in the solid phase. The present invention has been completed on the basis of this finding.

The present invention relates to an improved thermoplastic polyester resin produced by melt kneading:

(A) 99 to 40 parts by weight of a thermoplastic polyester and

(B) 1 to 60 parts by weight of a modified olefin copolymer produced by graft polymerization of 100 parts by weight of a polyolefin with 0.01 to 10 parts by weight of an unsaturated carboxylic acid and/or a derivative thereof,

and heat treating the molten mixture at a temperature in the range of 100°C to the melting point of the mixture for at least 30 min to cause grafting; and a process for producing the thermoplastic polyester resin.

The invention provides a process for preparing a thermoplastic polyester resin, which comprises the steps of melting and kneading (A) 99 to 40 parts by weight of a thermoplastic polyester and (B) 1 to 60 parts by weight of a modified olefin copolymer obtained by graft-polymerizing 0.01 to 10 parts by weight of an unsaturated carboxylic acid and/or a derivative thereof on 100 parts by weight of an olefin polymer and heating the kneaded mixture at a temperature between 100 degree C and a melting point of the kneaded mixture, in its solid state, for a period of not shorter than 30 minutes to effect grafting reaction between (A) and (B).

It is preferred that the heating step is conducted in an inert gas or at a reduced pressure of 1.3kPa (10 torr) or lower. At the reduced pressure, the polyester is prevented from decomposition due to oxidation and then damaged properties. An inert gas to use here includes helium gas, nitrogen gas, neon gas, argon gas, krypton gas and xenon gas. Helium, nitrogen and argon are preferred.

The kneaded mixture may further contain (C) 5 to 120 parts by weight of an inorganic filler per 100 parts by weight of the mixture of (A) and (B).

The invention provides a thermoplastic polyester resin as produced by the process as defined above.

It is preferable that (A) is a polyalkylene terephthalate or a polybutylene terephthalate or a copolyester containing polybutylene terephthalate for the major component.

It is preferred that the olefin copolymer for the (B) is a copolymer of ethylene and alpha-olefin, preferably a polar vinyl monomer such as vinyl acetate, acrylic acid, methacrylic acid, an acrylate ester, a methacrylate ester, a metal acrylate and a metal methacrylate.

In the invention, the olefin polymer is defined for a polyolefin and a polymer obtained from an olefin.

Now the detailed description will be made on the construction of the present invention.

The thermoplastic polyesters (A) to be used in the present invention are those produced by polycondensation of a dicarboxylic acid compound with a dihydroxy compound, polycondensation of a hydroxy carboxylic acid compound or polycondensation of these three compounds. The polyesters (A) usable in the present invention include both homopolyesters and copolyesters.

Examples of the dicarboxylic acid compounds usable herein include known dicarboxylic acid compounds such as terephthalic, isophthalic, naphthalenedicarboxylic, diphenyldicarboxylic, diphenyl ether dicarboxylic, diphenylethanedicarboxylic, cyclohexanedicarboxylic, adipic and sebacic acids each of which may be substituted with an alkyl or alkoxy group or a halogen atom. These dicarboxylic acid compounds can be used also in the form of ester-forming derivatives thereof, such as esters thereof with a lower alcohol, e.g. dimethyl esters. These compounds can be used either singly or as a combination of two or more of them.

The dihydroxy compounds include, for example, ethylene glycol, propylene glycol, butanediol, neopentyl glycol, hydroquinone, resorcinol, dihydroxyphenyl, naphthalenediol, dihydroxydiphenyl ether, cyclohexanediol, 2,2-bis(4-hydroxyphenyl)-propane and di-ethoxylated bisphenol A. It includes also a polyoxyalkylene glycols which may have a substituent such as an alkyl, an alkoxy and a halogen. One or more of them in combination may be used.

The hydroxy carboxylic acids include, for example, hydroxybenzoic, hydroxynaphthoic and diphenylenoxycarboxylic acids each of which may be substituted with an alkyl or alkoxy group or a halogen atom. Further ester-forming derivatives of them are also usable. They can be used either singly or as a combination of two or more of them.

The thermoplastic polyesters formed by polycondensation of the above-described compounds as the monomeric components are usable as the components (A) of the present invention. They can be used either singly or as a combination of two or more of them. Among them, polyalkylene terephthalates are preferred and particularly polybutylene terephthalate and copolymers mainly comprising the same are particularly preferred.

Then the description will be made on the modified olefin copolymers (B) produced by graft polymerization of a polyolefin with an unsaturated carboxylic acid and/or a derivative thereof.

The polyolefins constituting the skeleton of the copolymer (B) include homopolymers such as polyethylene, polypropylene, polybutene and polymethylpentene and copolymers of them.

The comonomer components include α-olefinic units such as propylene, 1-butene, 1-pentene, 4-methyl-1-pentene, 1-hexene, 1-octent, 1-decene and 1-dodecene. The diene units include non-conjugated diene components such as 1,4-hexadiene, dicyclopentadiene, 5-ethylidene-2-norbornene and 2,5-norbornadiene as well as conjugated diene components such as butadiene, isoprene and piperylene.

The copolymer may comprise a polar vinyl monomer. The polar vinyl monomer units include, for example, vinyl acetate, acrylic acid, methacrylic acid, arcylic esters, methacrylic esters and metal salts of acrylic and methacrylic acids.

Among them, ethylene/α-olefin copolymers are preferred. They include bipolymers such as ethylene/propylene copolymer, ethylene/1-butene copolymer, ethylene/4-methyl-1-pentene copolymer, ethylene/1-hexene copolymer, ethylene/1-octene copolymer and ethylene/1-decene copolymer; and terpolymers such as ethylene/propylene/1,4-hexadiene copolymer, ethylene/propylene/dicyclopentadiene copolymer, ethylene/propylene/5-ethylidene-2-norbornene copolymer, ethylene/1-butene/dicyclopentadiene copolymer and ethylene/1-butene/5-ethylidene-2-norbornene copolymer. The monomers graft-polymerizable with the skeleton polymers are unsaturated carboxylic acids and/or derivatives thereof. They include α,β-ethylenically unsaturated dicarboxylic acids such as maleic, fumaric and itaconic acids and anhydrides, esters and amide and imide compounds thereof; and unsaturated monocarboxylic acids such as acrylic and methacrylic acids and esters thereof.

Among these graft monomers, maleic acid and/or maleic anhydride are(is) particularly preferred.

The graft monomers are graft polymerized in an amount in the range of 0.01 to 10 parts by weight, preferably 0.05 to 5 parts by weight, for 100 parts by weight of the polyolefin. When the amount of the graft monomer is less than 0.01 part by weight, the impact resistance is not improved and, on the contrary, when it exceeds 100 parts by weight, a gel tends to be formed in the melt extrusion step.

The lower the degree of crystallization of the modified olefin copolymer, the better from the viewpoint of the improvement is the impact resistance. The degree of crystallization thereof is 40% or less, preferably 20% or less. The modified olefin copolymer is produced by any known graft polymerization process such as a process wherein an unsaturated carboxylic acid or the like is added to the above-described polyolefin and the mixture is melt kneaded preferably in the presence of a catalyst at 150 to 300°C. A commercially available modified olefin copolymer is also usable.

The mixing weight ratio of the thermoplastic polyester (A) to the modified olefin copolymer (B) used in the present invention is 99 to 40 / 1 to 60, preferably 95 to 50 / 5 to 50. The components (A) and (B) are melt mixed with each other by a known ordinary method with a known ordinary apparatus to obtain molten mixtures of various shapes depending on the use thereof. For example, the components (A) and (B) are previously thoroughly mixed with each other in the form of pellets or granules with a blender or the like and then the mixture is melt kneaded and extruded with a single-screw or twin-screw extruder to form pellets or it is molded into any desired shape such as strands or sheets to be further treated in the subsequent steps.

The molten mixture used in the present invention preferably comprises a dispersion of fine particles of the thermoplastic polyester (A) and the graft-modified olefin copolymer (B) which are intimately adhered to one another. The dispersed fine particles constituting the molten mixture have a size of usually 10 μ or less, preferably 3 μ or less.

The present invention is characterized in that the molten mixture prepared by the above-described process is heat treated at a specified temperature. Namely, the heat treatment msut be conducted at a temperature in the range of 100°C to the melting point of the mixture for at least 30 min, preferably at least 1 h. When the heating temperature is lower than 100°C, the effect of the present invention cannot be sufficiently exhibited or a quite long time is taken for exhibiting the effect. The heating time varies depending on the heating temperature. Usually the higher the temperature, the shorter the time.

The heat treatment is conducted by a process usually employed in the solid phase polymerization of polyesters. The heat treatment is conducted batchwise, continuously or by combination of a batchwise process with a continuous process. Although the atmosphere in which the heat treatment is conducted is not particularly limited, the treatment is preferably conducted under reduced pressure or in an inert gas such as nitrogen stream.

As described above, the present invention is characterized in that the molten mixture of the thermoplastic polyester (A) with the modified olefin copolymer (B) is heat treated at a temperature in the range of 100°C to the melting point of the mixture. By this treatment, characteristics which cannot be obtained by merely melt kneading them can be obtained.

It is well known that the mechanical properties of polyester resin moldings are modified as a result of a change in the molecular orientation thereof by the heat treatment. It is also known that the properties such as tensile elongation and impact strength are improved by an increase in the degree of polymerization by the solid phase polymerization or the like. However, surprisingly, the modification of the thermoplastic polyester resin produced by the process of the present invention results neither from the mere modification due to the molecular orientation caused by annealing of the polyester, nor from the modification due to only an increase in the degree of polymerization by the solid phase polymerization. It is proved that this effect is not a mere annealing effect, since a remarkable impact resistance can be obtained by merely molding the improved thermoplastic polyester resin into pellets. This fact is proved also from the results that the obtained impact resistance (toughness) is far higher than that obtained by merely melt blending a polyester having a degree of polymerization previously increased by the solid phase homopolymerization thereof with the modified olefin copolymer (B) used in the present invention and that other excellent properties are imparted to the resin of the present invention.

Therefore, it is understood that the increase in the impact strength (toughness) of the molten mixture of the thermoplastic polyester (A) with the modified olefin copolymer (B) is not due to the mere annealing effect or increase in the degree of polymerization of the polyester but due to the fact that the reaction of the polyester (A) with the modified olefin copolymer (B) occurs by the heat treatment to form a chemical bond between them, i.e. a branched structure. The formation of the branched structure is evident not only from the remarkably improved impact value and tensile strength but also from the observation of behavior of dynamic viscoelasticity in a molten state and the like. For example, an increase in die swelling which has not been observed in the mere solid phase polymerization conducted in order to increase the degree of polymerization of the polyester is observed in the present invention. This fact also suggests that the product of the present invention has a branched structure.

The improved thermoplastic polyester resin obtained by the present invention is characterized in that it can be molded by any of injection, extrusion, compression, foaming, blow and vacuum molding processes to form moldings having a high impact resistance without detriment to the modulus of elasticity and rigidity.

Further the components (A) and (B) may be melt-mixed and simultaneously molded into an intended shape and the moldings thus produced may be heat treated under special conditions to impart intended characteristics.

The improved thermoplastic polyester resin of the present invention may comprise, in addition to the above-described components, small amounts of other thermoplastic resins to form a composition so far as the use thereof is not impaired. The thermoplastic resins used as the additional ones include, for example, polyamide, ABS, polyphenylene oxide, polyalkyl acrylate, polyacetal, polysulfone, polyether sulfone, polyether imide, polyether ketone, phenoxy resin and fluororesin. These thermoplastic resins can be used either singly or in the form of a mixture of two or more of them.

These additional thermoplastic resins may be added to the mixture of the components (A) and (B) and then melt kneaded in the production of the improved thermoplastic resin of the present invention. The effect of the present invention can be obtained also in such a case.

An inorganic filler such as fibrous, granular or platy inorganic filler may be added to the improved thermoplastic polyester resin of the present invention to form a composition which is quite useful. The effect of the resin of the present invention can also be thus exhibited.

The fibrous fillers include inorganic fibrous materials such as glass fibers, asbestos fibers, carbon fibers, silica fibers, silica/alumina fibers, zirconia fibers, boron nitride fibers, silicon nitride fibers, boron fibers, and potassium titanate fibers as well as fibrous metals, e.g. stainless steel, aluminum, titanium, copper and brass. Typical fibrous fillers are glass fibers and carbon fibers.

The granular fillers include, for example, carbon black, silica, quartz powder, glass beads, glass powder, silicates such as calcium silicate, aluminum silicate, kaolin, talc, clay, diatomaceous earth and wollastonite; metal oxides such as iron oxide, titanium oxide, zinc oxide and alumina; metal carbonates such as calcium carbonate and barium carbonate; metal sulfates such as calcium sulfate and barium sulfate; silicon carbide; silicon nitride; boron nitride; and various metal powders.

The platy fillers include, for example, mica, glass flakes and various metal foils.

These inorganic fillers can be used either singly or as a combination of two or more of them. It is preferred to combine the fibrous filler, particularly glass fiber or carbon fiber with the granular and/or platy filler(s) in order to obtain excellent mechanical strengths, dimensional accuracy and electric properties.

It is desirable to use the filler in the presence of, if necessary, a coupling agent or a surface treatment which is a functional compound such as an epoxy, isocyanate, silane or titanate compound. Alternatively the fillers may be previously subjected to the surface treatment or coupling treatment, or the coupling agent or surface treatment may be added in the step of preparing the raw material.

The inorganic filler is used in an amount of 5 to 120 parts by weight for 100 parts by weight of the mixture of the polymers (A) and (B). When the amount of the filler exceeds 120 parts by weight, the moldability of the mixture is impaired seriously.

The thermoplastic polyester resin of the present invention may contain, as a matter of course, known additives which are usually added to thermoplastic or thermosetting resins, such as stabilizers, e.g., antioxidants and U.V. absorbers; antistatic agents; flame retardants; colorants, e.g., dyes and pigments; lubricants; crystallization accelerators; and nucleating agents.

The inorganic filler(s) and the additives can be added in any step in the production of the improved polyester resin of the present invention, or immediately before the production of the intended final moldings.

It is evident from the above description and Examples that the impact strength of the improved polyester of the present invention is increased as high as 10-fold that of the original polyester without impairing other physical properties thereof. The improved polyester resin obtained by the treatment of the present invention has a higher elongation and a far higher impact strength than those of the intermediate product formed by merely melt blending the constitutents thereof, without lowering the tensile strength, bending strength and modulus of elasticity. The improved polyester resin treated by the present invention is thus quite tough.

The improved thermoplastic polyester resin of the present invention having such characteristics can be suitably used as a material for automobile parts such as bumpers, trim plates and wheel covers, electric components and office automation appliances (housings).

[Examples]

The following examples will further illustrate the present invention, which by no means limit the invention.

Examples 1 and 2

5

Polybutylene terephthalate having an intrinsic viscosity of 1.0 as the component (A) was mixed with a modified olefin copolymer (B-1) having a degree of crystallization of 5 %, produced by graft copolymerizing an ethylene/α-olefin copolymer with maleic anhydride, as the component (B) in a ratio as shown in Table 1. The mixture was melt kneaded with an extruder at 250° C to form pellets, which were then heat treated under the conditions shown in Table 1 in a nitrogen stream.

Then various test pieces were prepared from the pellets by injection molding and the physical properties of them were determined by the following methods:

Tensile test: the tensile strength (kg/cm$^2$) and tensile elongation (%) were determined according to ASTM D 638.

Bending test: the bending strength (kg/cm$^2$) and Young's modulus in flexure (kg/cm$^2$) of the test pieces having a thickness of 6.4 mm were determined according to ASTM D 790.

Izod impact strength: the notched Izod impact strength (kg·cm/cm) of the test pieces having a thickness of 6.4 mm were determined according to ASTM D 256.

The results are shown in Table 1.


Examples 3 to 5

The pellets were prepared in the same manner as that of Example 1 and the properties of them were examined in the same manner as that of Example 1 except that they were treated under heating conditions shown in Table 1.


Comparative Examples 1 and 2

Polybutylene terephthalate per se was pelletized in the same manner as that of Example 1. The pellets were injection molded without heat treatment (Comparative Example 1) or the pellets were heat treated in the same manner as that of Example 1 and then injection molded (Comparative Example 2). The physical properties of the moldings thus formed are shown in Table 1.


Comparative Example 3

The heat treated polybutylene terephthalate prepared in Comparative Example 2 was mixed with the modified olefin copolymer (B-1) in a ratio shown in Table 1. The mixture was melt kneaded and pelletized. The pellets were molded without the heat treatment and the physical properties of the moldings were determined. The results are shown in Table 1.


Comparative Examples 4 and 5

The physical properties of the pellets prepared in Examples 1 and 2 but not heat treated were determined. The results are shown in Table 1.


Example 6

Pellets were prepared in the same manner as that of Example 1 except that a modified olefin copolymer (B-2) having a degree of crystallization of 3 %, produced by graft copolymerizing maleic acid, as the component (B) was used in an amount shown in Table 1. The pellets were heat treated and the physical properties thereof were determined. The results are shown in Table 1.


Comparative Example 6

The physical properties of the pellets prepared in Example 6 but not heat treated was determined. The results are shown in Table 1.

Example 7

Polyethylene terephthalate having an intrinsic viscosity (IV) of 0.8 as the component (A) was mixed with the modified olefin copolymer (B-1) produced by graft copolymerization with maleic anhydride as the component (B) in a ratio shown in Table 2. The mixture was melt kneaded with an extruder having a diameter for 30 mm to form pellets, which were then heat treated under the conditions shown in Table 2 in a nitrogen stream. The physical properties of the product were determined to obtain the results shown in Table 2.

Comparative Example 7

The physical properties of the pellets prepared in Example 6 but not heat treated were determined. The results are shown in Table 2.

Examples 8 and 9

Pellets were prepared in the same manner as that of Example 1 except that glass fibers (Example 8) or glass beads (Example 9) in a relative amount shown in Table 2 was used in addition to the polybutylene terephthalate and the ethylene/α-olefin copolymer (B-1) produced by grafting with maleic anhydride. The pellets were heat treated under the conditions shown in Table 2 and the physical properties thereof were determined. The results are shown in Table 2.

Comparative Examples 8 and 9

The physical properties of the pellets prepared in Examples 8 and 9 but not heat treated were determined. The results are shown in Table 2.

Comparative Examples 10 and 11

Polybutylene terephthalate was mixed with glass fibers (Comparative Example 10) or glass beads (Comparative Example 11) in a ratio shown in Table 2. The mixture was pelletized in the same manner as that of Examples 8 and 9. The physical properties of them not subjected to the heat treatment was determined. The results are shown in Table 2.

Example 10

The test was conducted in the same way as shown in Example 1, except that the component (B) was (B-3) a copolymer of ethylene and ethyl acrylate, grafted with maleic anhydride in the amount as shown in Table 3.

Comparative Example 12

The test was conducted in the same way a shown in Example 10, except that the heating was omitted.

Example 11

The test was conducted in the same way as shown in Example 1, except that the heating was effected at a reduced pressure of 133Pa (1 torr), not using the nitrogen gas.

Example 12

The test was conducted in the same manner as shown in Example 8, except that the component (B) was a copolymer of ethylene and ethyl acrylate, grafted with maleic anhydride.

Comparative Example 13

The test was effected in the same way as shown in Example 12, except that the heating was omitted.

Table 1

| | | unit | Example | | | | | | Comp. Ex. | | | | | |
|---|---|---|---|---|---|---|---|---|---|---|---|---|---|---|
| | | | 1 | 2 | 3 | 4 | 5 | 6 | 1 | 2 | 3 | 4 | 5 | 6 |
| (A) | Polybutylene terephthalate | parts by wt. | 90 | 70 | 90 | 90 | 90 | 90 | 100 | 100 | 90** | 90 | 70 | 90 |
| (B) | Modified olefin copolymer *2 B - 1 | ditto | 10 | 30 | 10 | 10 | 10 | — | — | — | 10 | 10 | 30 | — |
| | B - 2 | ditto | — | — | — | — | — | 10 | — | — | — | — | — | 10 |
| Heating conditions | temperature | °C | 210 | 210 | 210 | 170 | 130 | 210 | — | 210 | — | — | — | — |
| | time | hr | 12 | 12 | 5 | 20 | 30 | 12 | — | 12 | — | — | — | — |
| Tensile strength | | kg/cm² | 420 | 270 | 415 | 418 | 419 | 428 | 532 | 503 | 393 | 413 | 235 | 425 |
| Tensile elongation | | % | 418 | 480 | 403 | 409 | 398 | 390 | 230 | 248 | 290 | 275 | 300 | 268 |
| Bending strength | | kg/cm² | 657 | 351 | 659 | 661 | 667 | 675 | 880 | 850 | 653 | 670 | 355 | 681 |
| Young's modulus in flexure | | kg/cm² | 19200 | 10980 | 19100 | 19400 | 19000 | 19300 | 25100 | 24100 | 18600 | 19300 | 10600 | 1870 |
| Notched Izod impact strength | | kg·cm/cm | 52.6 | not broken | 50.3 | 50.7 | 48.9 | 49.0 | 3.8 | 4.6 | 12.0 | 10.5 | 23.0 | 9. |

*1  Polybutylene terephthalate prepared by solid phase polymerization in nitrogen stream
(Comparative Example 2) was kneaded with B-1.

*2  B-1:  Ethylene/α-olefin copolymer grafted with maleic anhydride.

B-2:  Ethylene/α-olefin copolymer grafted with maleic acid.

Table 2

| | | unit | Example | | | Comp. Ex. | | | | |
|---|---|---|---|---|---|---|---|---|---|---|
| | | | 7 | 8 | 9 | 7 | 8 | 9 | 10 | 11 |
| (A) | Polybutylene terephthalate | parts by wt. | - | 75 | 60 | - | 75 | 60 | 85 | 70 |
| | Polyethylene terephthalate | ditto | 70 | - | - | 70 | - | - | - | - |
| (B) | Modified olefin copolymer B-1 | ditto | 30 | 10 | 10 | 30 | 10 | 10 | - | - |
| | Glass fiber | ditto | - | 15 | - | - | 15 | - | 15 | - |
| | Glass beads | ditto | - | - | 30 | - | - | 30 | - | 30 |
| Heating conditions | temperature | °C | 210 | 210 | 210 | - | - | - | - | - |
| | time | hr | 12 | 12 | 12 | - | - | - | - | - |
| Tensile strength | | kg/cm$^2$ | 263 | 738 | 415 | 257 | 684 | 360 | 950 | 535 |
| Tensile elongation | | % | 123 | 9.5 | 6.1 | 77.0 | 5.4 | 4.3 | 4.5 | 3.7 |
| Bending strength | | kg/cm$^2$ | 413 | 1220 | 805 | 408 | 1110 | 708 | 1590 | 935 |
| Young's modulus in flexure | | kg/cm$^2$ | 11700 | 38600 | 36800 | 11900 | 35100 | 33700 | 51000 | 40500 |
| Notched Izod impact strength | | kg·cm/cm | 51.0 | 13.5 | 5.1 | 18.0 | 8.1 | 2.7 | 6.0 | 2.3 |
| Note) | | | | | | | | | | |
| B-1: Ethylene/α-olefin copolymer grafted with maleic anhydride. | | | | | | | | | | |

Table 3

| | | unit | Example | | | Comp. Ex. | |
|---|---|---|---|---|---|---|---|
| | | | 10 | 11 | 12 | 12 | 13 |
| (A) | Polybutylene terephthalate | parts by weight | 90 | 90 | 75 | 90 | 75 |
| | Polyethylene terephthalate | ditto | - | - | - | - | - |
| (B) | Modified olefin copolymer B-1 | ditto | - | 10 | - | - | - |
| | B-3 | ditto | 10 | - | 10 | 10 | 10 |
| | Glass fiber | ditto | - | - | 15 | - | 15 |
| | Glass beads | ditto | - | - | - | - | - |
| Heating conditions | temperature | °C | 210 | 210 | 210 | - | - |
| | time | hr | 12 | 12 | 12 | - | - |
| Tensile strength | | kg/cm² | 427 | 421 | 744 | 425 | 735 |
| Tensile elongation | | % | 422 | 445 | 10.1 | 246 | 5.8 |
| Bending strength | | kg/cm² | 639 | 642 | 1150 | 662 | 1190 |
| Young's modulus in flexure | | kg/cm² | 20200 | 19100 | 39100 | 20100 | 38900 |
| Notched Izod impact strength | | kg · cm/cm | 55.0 | 50.9 | 15.0 | 11.9 | 8.0 |

## Claims

1. A process for preparing a thermoplastic polyester resin, which comprises the steps of melting and kneading (A) 99 to 40 parts by weight of a thermoplastic polyester and (B) 1 to 60 parts by weight of a modified olefin copolymer obtained by graft-polymerizing 0.01 to 10 parts by weight of an unsaturated carboxylic acid and/or a derivative thereof on 100 parts by weight of an olefin polymer and heating the kneaded mixture at a temperature between 100 degree C and a melting point of the kneaded mixture, in its solid state, for a period of not shorter than 30 minutes to effect grafting reaction between (A) and (B).

2. A process as claimed in Claim 1, in which the heating step is conducted in an inert gas or at a reduced pressure of 1.33kPa (10 torr) or lower.

3. A process as claimed in Claim 1 or Claim 2, in which (C) 5 to 120 parts by weight of an inorganic filler is added to 100 parts by weight of the mixture of (A) and (B).

4. A thermoplastic polyester resin as produced by the process as defined in any one of Claims 1 to 3.

5. A resin as claimed in Claim 4, in which the polyester (A) is a polyalkylene terephthalate.

6. A resin as claimed in Claim 4, in which the polyester (A) is polybutylene terephthalate or a copolyester containing polybutylene terephthalate for the major component.

7. A resin as claimed in any one of Claims 4 to 6, in which the olefin copolymer (B) is a copolymer of ethylene and alpha-olefin.

8. A resin as claimed in any one of Claims 4 to 6, in which the olefin copolymer (B) is a copolymer of ethylene and a polar vinyl monomer.

9. A resin as claimed in Claim 8, in which the olefin copolymer (B) is a copolymer of ethylene and a polar vinyl monomer selected from the group consisting of vinyl acetate, acrylic acid, methacrylic acid, an acrylate ester, a methacrylate ester, a metal acrylate and a metal methacrylate.